# FASCICULE DE BREVET EUROPEEN

(11) **EP 0 992 223 B1**
(45) Date de publication et mention de la délivrance du brevet: **23.04.2003**
(21) Numéro de dépôt: 99440042.2
(22) Date de dépôt: 02.03.1999
(51) Int. Cl.: A61C 13/30

(54) **Tenon dentaire en materiau composite radio-opaque**
Aus strahlenundurchlässige Verbundwerkstoffen hergestellter Wurzelanker
Dental post made of radiopaque composite material

(30) Priorité: 29.09.1998 FR 9812268
(43) Date de publication de la demande: 12.04.2000
(73) Titulaire: Bachmann, Marc William, 34190 Ganges (FR); Bachmann, Sonia, 34190 Ganges (FR)
(72) Inventeur: Bachmann, Marc William, 34190 Ganges (FR); Bachmann, Sonia, 34190 Ganges (FR)
(74) Mandataire: Portal, Gérard

(56) Documents cités:
- EP-A- 0 432 001
- WO-A-96/26686
- DE-A- 2 824 214
- FR-A- 2 753 365
- US-A- 5 741 139

## Description

La présente invention a pour objet un tenon dentaire en matériau composite radio-opaque.

Les tenons dentaires corono-radiculaires en matériau composite destinés à la reconstruction coronaire des dents délabrées tendent de plus en plus à remplacer les tenons en alliages métalliques utilisés depuis des décennies.

Les tenons en alliage métallique, précieux ou non précieux, présentent en effet plusieurs inconvénients :
- ils peuvent être le siège de courants galvaniques qui créent des phénomènes de corrosion avec libération d'ions métalliques ;
- leur module d'élasticité est dix fois plus élevé que celui de la dentine en sorte que, lors de la fonction masticatoire, en transmettant à l'organe dentaire les forces auxquelles ils sont soumis, ils peuvent provoquer des fractures de la racine et la perte de la dent concernée.

Les tenons en matériau composite, constitués d'une matrice de résine dans laquelle sont noyées des fibres de renfort, ne présentent pas ces inconvénients iatrogènes.

Des tenons réalisés en matériau composite ont été décrits dans les brevets FR-A-2 626 167, FR-A-2 588 181 et EP - 0 432 001.

Ces documents décrivent tous les modes de fabrication des tenons composites, les différentes fibres de renfort et résines matrices utilisables.

Les fibres de renfort utilisables sont les fibres de carbone, les fibres de verre, les fibres aramides, Kevlar ou autres.

Les résines matrices utilisables sont les résines époxydes, les polyvinylesters ou les polyméthacrylates.

Toutefois, toutes ces fibres et résines sont transparentes aux rayons X, alors que la visibilité aux rayons X des tenons scellés dans les dents est de grande importance pour le dentiste clinicien.

Le moyen le plus évident de rendre visibles aux rayons X les différents matériaux composites utilisés pourrait être d'ajouter à la matrice résine une charge d'un produit radio-opaque ; ceci a été expérimenté mais les résultats obtenus sont loin d'être concluants.

En effet, la proportion de résine généralement mise en oeuvre pour l'élaboration d'un matériau composite de qualité est de 20 à 40 % en volume et les tenons ont un diamètre compris entre 1 et 2 mm. Etant donné la faible proportion de résine et le faible diamètre des tenons, il est difficile d'ajouter une charge radio-opaque en quantité suffisante pour que le tenon soit visible aux rayons X.

D'autre part, l'introduction d'une telle charge dans la résine a pour effet d'en augmenter la viscosité : la résine s'épaissit, avec pour conséquence un mouillage imparfait des fibres de renfort. Le composite obtenu a une mauvaise cohésion et ses propriétés mécaniques sont beaucoup moins bonnes.

De plus, la charge radio-opaque ne se distribue pas de façon régulière dans la résine, mais selon un mode aléatoire, ce qui fait que certaines parties sont riches en produit radio-opacifiant et d'autres n'en renferment pas : la radio-opacité obtenue est non seulement faible, mais de plus irrégulière.

La présente invention a pour but de remédier à ces inconvénients en proposant l'utilisation d'une fibre de renfort radio-opaque pour la réalisation du matériau composite servant à la fabrication des tenons.

La fibre de renfort utilisée peut être une fibre de verre, de quartz ou de silice renfermant de l'oxyde de zirconium, ou zircone, qui est un produit radio-opaque.

L'adjonction de zircone à la fibre de renfort donne une fibre rapio-opaque qui, utilisée pour la fabrication du matériau composite dans une proportion de 60 à 80 % en volume, confère aux tenons une radio-opacité suffisante, sans adjonction d'aucune charge à la matrice résineuse.

L'adjonction de zircone à la fibre de renfort a en outre pour effet de rendre celle-ci alcaline-résistante et d'améliorer ses propriétés mécaniques, ce qui fait du produit un matériau particulièrement bien adapté à l'élaboration de tenons dentaires.

L'adjonction de zircone à la fibre de renfort s'effectue au cours de sa fabrication, l'additif choisi étant introduit sous forme de poudre dans la poudre de silice ou le mélange de poudres d'oxydes servant à la fabrication du verre.

La proportion de zircone dans la fibre de renfort est avantageusement comprise entre 10 et 30 % en poids, et de préférence entre 15 et 20 % en poids.

La matrice résineuse du matériau composite peut être une résine époxyde, un polyvinylester ou un polyméthacrylate.

Le matériau composite peut être obtenu par différents procédés connus, tels que moulage par injection, pultrusion, compression transfert, ou une combinaison de ces procédés.

Les tenons dentaires fabriqués à l'aide du matériau composite radio-opaque qui vient d'être décrit sont de couleur blanche ou ivoire et présentent une bonne radio-opacité, sans altération de leurs propriétés mécaniques.

## Revendications

1. Tenon dentaire radio-opaque fabriqué à partir d'un matériau composite constitué de fibres de renfort noyées dans une matrice de résine, **caractérisé en ce que** les fibres de renfort dudit matériau composite renferment de 10 à 30 % en poids de zircone.

2. Tenon dentaire selon la revendication 1, **caractérisé en ce que** les fibres de renfort du matériau composite sont des fibres de verre, de quartz ou de silice.

3. Tenon dentaire selon l'une quelconque des revendications précédentes, **caractérisé en ce que** les fibres de renfort renferment de 15 à 20 % en poids de zircone.

4. Tenon dentaire selon l'une quelconque des revendications précédentes, **caractérisé en ce que** la matrice du matériau composite est constituée d'une résine choisie parmi les résines époxydes, les polyvinylesters et les polyméthacrylates.

5. Tenon dentaire selon l'une quelconque des revendications précédentes, **caractérisé en ce que** le matériau composite renferme de 20 à 40 % en volume de résine et de 60 à 80 % en volume de fibres de renfort.

## Patentansprüche

1. Strahlungsundurchlässiger Wurzelanker, der hergestellt ist aus einem Verbundmaterial, bestehend aus Verstärkungsfasern, die in eine Harzmatrix eingelassen sind, **dadurch gekennzeichnet, dass** die Verstärkungsfasern des Verbundmaterials 10 bis 30 Gew.-% Zirkoniumdioxid enthalten.

2. Wurzelanker nach Anspruch 1, **dadurch gekennzeichnet, dass** die Verstärkungsfasern des Verbundmaterials Glas-, Quarz- oder Siliciumdioxid-Fasern sind.

3. Wurzelanker nach einem der vorhergehenden Ansprüche, **dadurch gekennzeichnet, dass** die Verstärkungsfasern 15 bis 20 Gew.-% Zirkoniumdioxid enthalten.

4. Wurzelanker nach einem der vorhergehenden Ansprüche, **dadurch gekennzeichnet, dass** die Matrix des Verbundmaterials aus einem Harz aus der Gruppe der Epoxidharze, der Polyvinylester und der Polymethacrylate besteht.

5. Wurzelanker nach einem der vorhergehenden Ansprüche, **dadurch gekennzeichnet, dass** das Verbundmaterial 20 bis 40 Vol.-% Harz und 60 bis 80 Vol.-% Verstärkungsfasern enthält.

## Claims

1. Radiopaque dental post manufactured from a composite material comprising reinforcing fibers embedded in a resin matrix, **characterized in that** the reinforcing fibers of said composite material contain from 10 to 30% by weight of zirconia.

2. Dental post according to claim 1, **characterized in that** the reinforcing fibers of the composite material are made of fibers of glass, fibers of quartz or fibers of silica.

3. Dental post according to any one of the preceding claims, **characterized in that** the reinforcing fibers of the composite material contain from 15 to 20% by weight of zirconia.

4. Dental post according to any one of the preceding claims, **characterized in that** the matrix of the composite material consists of a resin chosen from epoxy resins, polyvinyl esters and polymethacrylates.

5. Dental post according to any one of the preceding claims, **characterized in that** the composite material contains from 20 to 40% by volume of resin and from 60 to 80% by volume of reinforcing fibers.
